# EUROPÄISCHE PATENTSCHRIFT

(11) **EP 2 316 677 B1**
(45) Veröffentlichungstag und Bekanntmachung des Hinweises auf die Patenterteilung: **12.12.2012**
(21) Anmeldenummer: 10187916.1
(22) Anmeldetag: 18.10.2010
(51) Int. Cl.: B60H 1/34

(54) **Luftausströmer**
Air outlet
Aérateur

(30) Priorität: 27.10.2009 DE 102009050885
(43) Veröffentlichungstag der Anmeldung: 04.05.2011
(73) Patentinhaber: Behr GmbH & Co. KG, 70469 Stuttgart (DE)
(72) Erfinder: Fritsche, Uwe, 71686, Remseck am Neckar (DE); Zeller, Kuno, 70469, Stuttgart (DE); Fieger, Martin, 71636, Ludwigsburg (DE); Reisinger, Dieter, 71665, Vaihingen/Enz (DE)
(74) Vertreter: Grauel, Andreas

(56) Entgegenhaltungen:
- EP-A1- 1 972 475
- WO-A1-2005/021301
- DE-A1-102007 010 795
- DE-U1-202008 008 827

## Beschreibung

Die Erfindung betrifft einen Luftausströmer gemäß dem Oberbegriff des Anspruches 1 und eine Kraftfahrzeugklimaanlage.

In Kraftfahrzeugen werden Luftausströmer eingesetzt, um Luft in den Innenraum des Kraftfahrzeuges einzuleiten. Die in den Innenraum mittels Luftausströmer eingeleitete Luft wird, soweit Bedarf besteht, in einer Klimaalage erwärmt und/oder gekühlt.

Dabei sind auch Luftausströmer bekannt, die Diffus-AusJassoffnungen und Spot-Auslassöffnungen aufweisen. Aus den Diffus-Auslassöffnungen kann die Luft als Diffus-oder Drallstrahl ausgeleitet werden und aus den Spotauslassöffnungen kann die Luft jeweils als Spotstrahl ausgeweitet werden. Derartige Luftausströmer erhöhen den Komfort innerhalb eines Kraftfahrzeuges, weil die aus den Luftausströmer Luft unterschiedlich, d.h. als Diffus- oder Drallstrahl und/oder als Spotstrahl, ausgleitet werden kann. Zur Steuerung der aus der Spot-Ausiassöffnung ausgeleiteten Ausströmrichtung der Luft sind dabei Luftausströmer bekannt, die einen bewegbaren Rohrstutzen aufweisen. Der Rohrstutzen dient dabei als Ende eines Spot-LuftführungskanaSes und kann aufgrund des Verschwenkens die Luft als Spotstrahl in unterschiedlichen Ausströmrichtungen ausleiten. Bei einem Verschwenken des Rohrstutzens nach rechts wird der Spotstrahl somit beispielsweise nach rechts umgelenkt. Der Rohrstutzen weist dabei eine Einströmöffnug zum Einleiten der Luft in den Rohrstutzen und eine Ausströmöffnung zum Ausleiten der Luft als Spotsfrahl auf. Beim Einleiten der Luft in den Rohrstutzen an der Einströmöffnung kann dabei Leckageluft auftreten, so dass dadurch die Menge an Luft. Welche durch den Rohrstutzen geleitet wird, verringert wird. Dies ist nicht weil dadurch weniger Luft als Spotstrahl aus dem Luftströmer ausgeleitet werden kann und im Allgemeinen diese Luft einer konzentrisch um den Rohrstutzen angeordneten Diffus-Ausiassöffnung zugeleitet wird bzw. einem Diffus-LuftführungskanaL Beim Verschwenken des Rohrstutzens wird die durch den Rohrstutzen gelei-, tete Luft am Rohrstutzen umgeleitet, so dass aufgrund der großen Querschnittsfläche des Strömungsraumes innerhalb des Rohrstutzens die Luft nicht ausreichend parallel gerichtet, d, h, auch mit Wirbeln versehen,aus der Spotaus!assöffnung austritt.

Die EP 1 972 475 A1 zeigt einen Luftausströmer mit zumindestens zwei parallel zueinander angeordneten Lufiführungskanälen, wobei für Jeden der Luftführungskanäle ein Luftstrom mit einer diffusen und/oder ein Luftstrom mit einer gerichteten Strömungscharakteristik und in einer in strömungsausgangsseitigen Bereich der Luftführungskanäle angeordneten Wechselwirkungszone durch Mischung der Luftströme der Luftührungskanäle eine Gesanitströmungscharakteristik einstellbar ist.

DE 20 2008 008827 U1 offenbart einen Luftausströmer nach dem Oberbegriff des Anspruchs 1.

Die Aufgabe der vorliegenden Erfindung besteht deshalb darin, einen Luftausströmer und eine Kraftfahrzeugklimaanlage zur Verfügung zu stellen, bei der die durch den Rohrstutzen als Spot-Luftführungskanal ausgeleitete Luft im Wesentlichen vollständig in unterschiedlichen Ausströmrichtungen bei einem Verschwenken des Rohrstutzenes im Wesentlichen ohne eine Wirbelbildung innerhalb des Rohrstutzens umgeleitet werden kann und beim Einleiten der Luft in den Rohrstutzen wenig Leckageluft auftritt. Ferner soll der Luftausströmer wenig Bauraum benötigen.

Diese Aufgabe wird gelöst mit einem Luftausströmer, insbesondere für ein Fahrzeuginnenraum-Belüftungssystem, umfassend wenigstens einen Diffus-Luftführungskanal mit wenigstens einer Diffus-Auslassöffnung zum Ausleiten der Luft als Diffus- oder Drallstrahl, wenigstens einen Spot-Luftführungskanal mit wenigstens einer Spot-Auslassöffnung zum Ausleiten der Luft als Spotstrahl, wenigstens einen bewegbaren Rohrstutzen mit einer Einströmöffnung und einer Ausströmöffnung als Spot-Auslassöffnung und der wenigstens eine Rohrstutzen den wenigstens einen Spot-Luftführungskanal an der wenigstens einen Spot-Auslassöffnung bildet und mittels eines Bewegens des wenigstens einen Rohrstutzens unterschiedliche Ausströmrichtungen des Spotstrahles aus der wenigstens einen Spot-Auslassöffnung einstellbar sind, wobei der wenigstens eine Rohrstutzen an der Einströmöffnung eine größere Querschnittsfläche, z. B. eine um wenigstens 5%, 10%, 20% oder 30% größere Querschnittsfläche, aufweist als an der Ausströmöffnung und in dem Rohrstutzen wenigstens eine Luftleitwandung ausgebildet ist. Aufgrund der größeren Querschnittsfläche des Rohrstutzens an der Einströmöffnung im Vergleich zur Ausströmöffnung, kann die dem wenigstens einen Rohrstutzen einzuleitende Luft kontrollierter und mit weniger Leckageluft innerhalb des Luftausströmers eingeleitet werden. Damit können Verluste an Luft, welcher dem wenigstens einen Rohrstutzen einzuleiten sind, als Spotstrahl verringert werden. Die wenigstens eine Luftleitwandung innerhalb des Strömungsraumes des wenigstens einen Rohrstutzens kanalisiert und unterteilt den Strömungsraum des Rohrstutzens in Teilströmungsräume, so dass dadurch auch bei einem starken Verschwenken des wenigstens einen Rohrstutzens und damit einer verbundenen starken Umlenkung der Luft von der Einströmöffnung zur Ausströmöffnung an dem wenigstens einen Rohrstutzen weiterhin eine kontrollierte und spotartige Ausweitung der Luft an der Ausströmöffnung des wenigstens einen Rohrstutzen gewährleistet ist. Die wenigstens eine Luftleitwandung kanalisiert somit den Strömungsraum innerhalb des wenigstens einen Rohrstutzens, so dass dadurch Verwirbelungen innerhalb des wenigstens einen Rohrstutzens im Wesentlichen ausgeschlossen sind. Der wenigstens eine Rohrstutzen weist einen beliebigen Querschnitt auf, ist z. B. kreis-, ellipsenförmig oder rechteckig

insbesondere weist der wenigstens eine Rohrstutzen eine konische Form mit einer in Strömungsnchtung der Luft abnehmenden Queischnittsfläche auf, Aufgrund der konischen Form des wenigstens einen Rohrstutzens tritt eine im Wesentlichen gleichmäßige Verringerung der Querschn!ttsf!äche von der Ausströmöffnung zur Einströmöffnung auf, so dass dadurch in vorteilhafter Weise die Strömungsveduste innerhalb des wenigstens einen Rohrstutzens verringert werden und keine Strömungsbarrieren, beispielsweise Stufen, zur Verringerung der Querschnittsfläche, auftreten.

In einer weiteren Ausgestaltung weist der wenigstens eine Rohrstutzen an der E!nsirömöffnung eine größere Breite und/oder eine größer Höhe auf als an der Ausströmöffnung.

In einer ergänzenden Ausführungsform ist der wenigstens eine Rohrstutzen rotätsonssymmetrisch ausgebildet. Die Rotationsachse, bezüglich der der wenigstens eine Rohrstutzen rotationssymmetrisch ausgeführt ist, entspricht dabei vorzugsweise einer zentrischen Achse und/oder ist parallel zur einer Strömungsnchtung der durch den wenigstens einen Rohrstutzen geleiteten Luft.

Vorzugsweise ist der wenigstens eine Rohrstutzen verschwenkbar.

In einer Variante ist der wenigstens eine Rohrstutzen um eine horizontale oder eine vertikale Schwenkachse verschwenkbar.

in einer weiteren Ausgestaltung umfasst der Luftausströmer einen Mechanismus, mittels dem der Rohrstutzen mittels eines außenseitig an dem Luftausströmer angeordneten Stellgliedes bewegt werden kann. Hierzu weist der Luftströmer beispielsweise ein Stellrad oder ein translatorisch verschiebbares Stellelement auf, von dem mittels des Mechanismus und mittels an dem Rohrstutzen angeordneten Arlenkpunkten der Rohrstutzen bewegt werden kann.

Zweckmäßig ist die wenigstens eine Luftleitwandung im Wesentlichen parallel zu einer Achse des wenigstens einen Rohrstutzens oder einer Strömungsrichtung der Luft in dem wenigstens einen Rohrstutzen ausgerichtet

einer weiteren Ausführungsform ist die wenigstens eine Luftleitwandung mit einer Abweichung von weniger als 20º, 10º oder 5° parallel zu der Achse des wenigstens einen Rohrstutzens oder der Strömungsrichtung der Luft in dem wenigstens einen Rohrstutzen ausgerichtet.

insbesondere ist die wenigstens eine Luftleitwandung eben. Die wenigstens eine Luftleitwandung weist somit eine ebene Oberfläche auf, d, h, ist beispielsweise nicht mit Krümmungen versehen, so dass dadurch ein gezieltes Leiten der Luft mit im Wesentlichen parallelen Strömungslinien innerhalb des Rohrstutzens gewährleistet ist. Damit kann die Ausbildung von Wirbeln innerhalb des wenigstens einen Rohrstutzens im Wesentlichen ausgeschlossen oder verringert werden.

In einer weiteren Ausgestaltung ist die wenigstens eine Luftieitvvandunginnerhalb des Strömungsraumes des wenigstens einen Rohrstutzens vollständig durchlaufend ausgebildet, so dass die wenigstens eine Luftleitwandung den Strömungsraum innerhalb des wenigstens einen Rohrstutzens in wenigstens zwei voliständig abgetrennte Teilströmungsräume unterteilt Die wenigstens eine Luftleitwandung ist somit innerhalb des wenigstens einen Rohrstutzens durchlaufend ausgebildet, d. h. bei einer beispielsweise vertikalen Ausrichtung der wenigstens einen Luftleitwandung ist die wenigstens eine Lüftleitwandung vertikal vollständig durchlaufend ausgebildet.

Alternativ ist die Luftleitwandung vorteilhafterweise innerhalb des Strömungsraumes des wenigstens einen Rohrstutzens nicht in voller Länge ausgebildet, insbesondere nur über einen Bereich von kleiner 80%, 70%, 60%, 50%, 40%, 30% oder 20% der Länge des Rohrstulzens. Bevorzugt ist eine derartige Luftleitwandung am Einlass,Auslass oder in der Mitte, mit Abstand zum Einlass oder Auslass, des Rohrstutzens angeordnet. Denkbar sind auch zwei oder mehrere Luftleitwandungen hintereinander angeordnet, wobei zwischen den einzelnen Luftleitwandungen jeweils eine Lücke verbleibt.

in einer ergänzenden Variante weist der Luftausströmer nur eine Lufteitwandung auf.

In einer weiteren Variante ist die eine Luftleitwandung als Mittelwandung in dem wenigstens einen Rohrstutzen ausgebildet, so dass die Mittelwandung den Strömungsraum innerhalb des wenigstens einen Rohrstutzens in nur zwei vollständig abgetrennte, im Wesentlichen gleich große Teilströmungsräume unterteilt.

In einer weiteren Variante ist in Strömungsrichtung vor dem wenigstens einen Rohrstutzen ein Drallerzeuger angeordnet.

In einer zusätzlichen Ausgestaltung ist innerhalb des Drallerzeugers ein Spot--Luftführungskanal ausgebildet.

In einer zusätzlichen Ausgestaltung ist der Drallerzeugerkonzentrisch um den Spot-Luftührungskanal ausgebildet.

In einer weiteren Ausgestaltung ist der wenigstens eine Rohrstutzen innerhalb des wenigstens einen Diffus-Luftrührungskanales angeordnet und/oder umfasst der Luftausströmer ein Gehäuse und innerhalb des Gehäuses ist der wenigstens eine Rohrstutzen angeordnet und vorzugweise ist von dem Gehäuse der wenigstens einen Diffus-Luftführungskanal begrenzt.

In einer zusätzlichen Ausgestaltung unterteilt die wenigstens eine Luftleitwandung den Strömungsraum des wenigstens einen Rohrstutzens in Teilströmungsräume

Erfindungsgemäße Kraftfahrzeugklimaanlage, wobei die Kraftfahrzeugklimaanlage wenigstens einen in dieser Schutzrechtsanmeldung beschriebenen Luftausströmer umfasst.

insbesondere weist die Kraftfahrzeugklimaanlage zwei Luftausströmer jeweils für eine Fahrerseite und eine Beifahrerseite auf und die Stellung des wenigstens einen Rohrstutzens ist separat bzw. unabhängig voneinander oder gekoppelt bzw. gemeinsam für die Fahrerseite und die Beifahrerseite steuerbar.

In einer ergänzenden Ausführungsform sind Stellungen des wenigstens einen Rohrstutzen stufenlos einstellbar. Der Luftausströmer kann damit besonders einfach von z. B. einem Stellrad bedient werden.

In einer weiteren Ausgestaltung ist die wenigstens eine Spot-Auslassöffnung im Querschnitt innerhalb der wenigstens einen Diffus-Auslassöffnung aus. - gebildet und/oder die wenigstens eine Diffus-Auslassöffnung ist konzentrisch um die wenigstens eine Spot-Auslassöffnung ausgebildet.

In einer weiteren Ausgestaltung umfasst die Kraftfahrzeugkiimaanlage einen Käitemittejverdampfer und/oder ein Gebläse und/oder eine Heizeinrichtung und/oder einen Luftfilter.

Im Nachfolgenden wird ein Ausführungsbeispiel der Erfindung unter Bezugnahme auf die beigefügten Zeichnungen näher beschrieben. Es zeigt
- Fig. 1: eine Seitenansicht eines Luftausströmers ohne Gehäuse,
- Fig. 2: eine Draufsicht des Luftausströmers gemäß Fig. 1.
- Fig. 3: eine Vorderansicht des Luftausströmers gemäß Fig. 1,
- Fig. 4: eine Seitenansicht eines Rohrstutzens des Luftausströmers gemäß Fig. 1,
- Fig. 5: den Schnitt A-A gemäß Fig. 4 des Rohrstutzens.

Der Luftausströmer 1 dient zur Zuführung von Luft aus einer nicht dargestellten Kraftfahrzeugklimaaniage als Spotstrahl und/oder als Diffus- oder Drallstrahl in einen lnnenraum eines Kraftfahrzeuges.

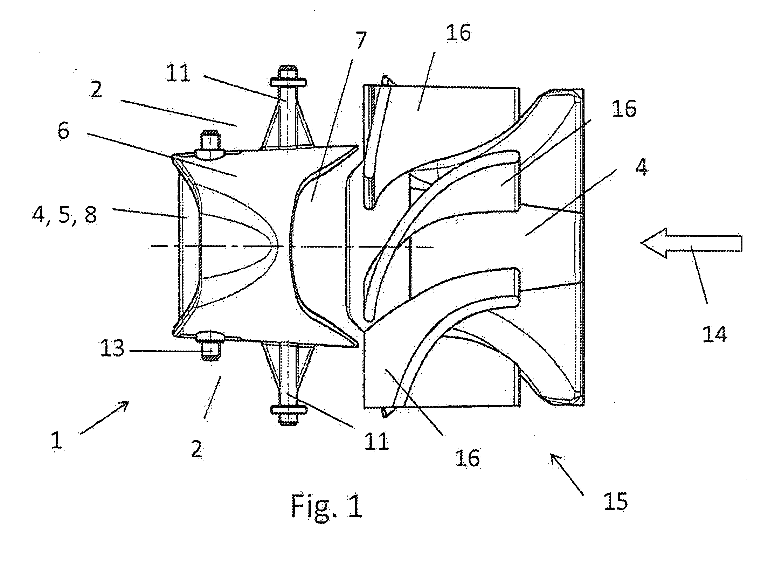

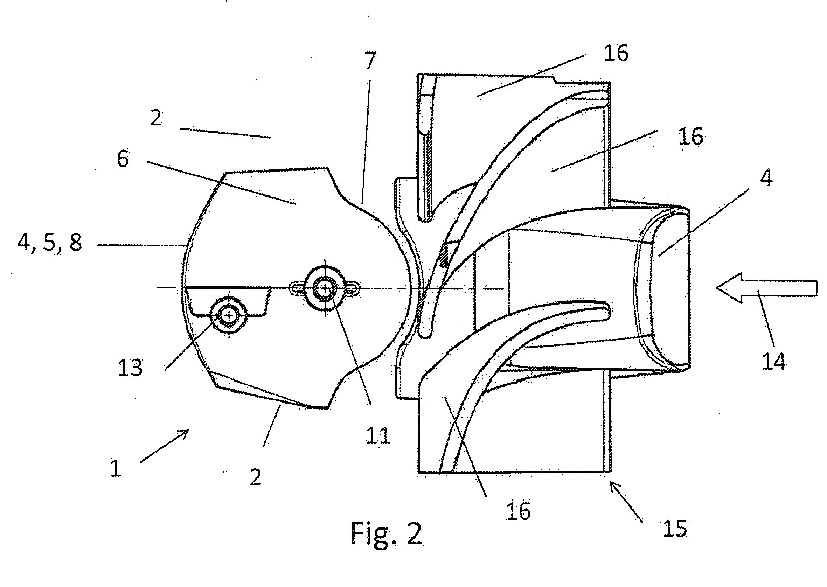

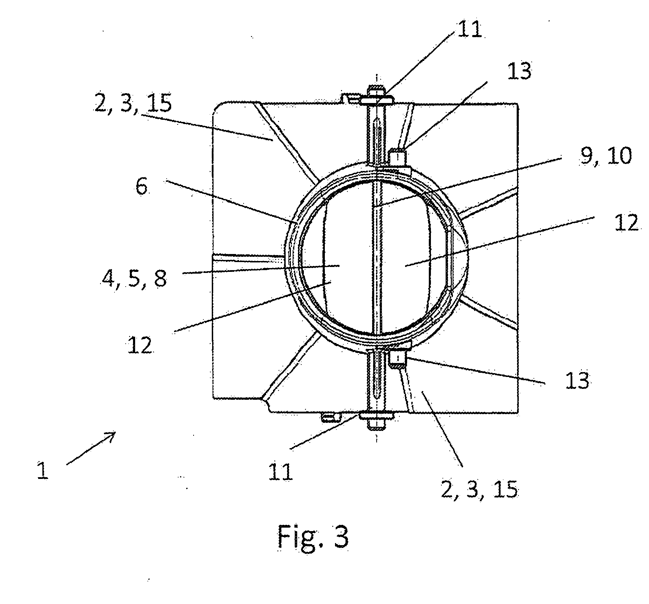

Innerhalb eines nicht dargestellten Gehäuses des Luftausströmers 1 ist ein Rohrstutzen 6 und ein Drallerzeuger 15 angeordnet. Die Luft durchströmt dabei den Luftausströmer 1 innerhalb des nicht dargestellten Gehäuses zunächst den Drallerzeuger 15 und anschließend den Rohrstutzen 6. Der Drallerzeuger 15 weist schraubenförmige Luitleiteinrichtungen 16 auf (Fig. 1 und 2) mittels denen die Luft in einen Diffus- oder Drallstrahl umgelenkt wird. lnnerhalb der schraubenförmigen Luftleiteinrichtungen 16 ist ein Spot-Luftführungskanal 4 ausgebildet (Fig. 1 und 2). Nach dem Austreten der von den schraubenförmigen Luftleiteinrichtungen 16 umgelenkten Luft am Drallerzeuger 15 wird die Luft an dem Luftausströmer 1 an einer Dif-3 (Fig. 3) ausgeleitet. Der Strömungsraum, welcher zwischen dem nicht dargestellten Gehäuse und dem Rohrstutzen 6 angeordnet bzw, ausgebildet ist, stellt somit einen Diffus-Luftführungskanal 2 dar sowie ebenfalls der Strömungsraum an dem Drallerzeuger 15 außerhalb des Spot-Luftführungskanales 4 und innerhalb des nicht dargesteilten Gehäuses, d. h. im Bereich der schraubenförmigen Luftleiteinrichtungen 16. In Fig. 1 und 2 ist dabei der in den Luftausströmer 1 einströmende Luftstrom 14 mit einem Pfeil dargestellt Durch die Diffus-Ausiassöffnung 3 kann somit Luft als Diffus- oder Spotstrahl aus dem Luftausströmer 1 ausgeleitet werden,

Die Luft, welche durch den Spot-Luftfuhrungskanal 4 innerhalb der schraubenförmigen Luftleiteinchtungen 16 durchgeleitet wird strömt nach dem Ausleiten in den Rohrstutzen 6 ein. Der Rohrstutzen 6 weist dabei eine Einströmöffnung 7 und eine Ausströmöffnung 8 auf. Die Ausströmöffnung 8 des Rohrstutzens in stellt somit eine Spot-Aus!assöffnung 5 des Luftausströmers 1 dar.

Die Querschnittsfläche des Rohrstutzens 6 an der Einströmöffnung 7 ist dabei größer als die Querschnittsfläche an der Ausströmöffnung 8. Dabei: weist der Rohrstutzen 6 eine konische Form auf mit einem abnehmenden Durchmesser von der Einströmöffnung 7 zu der Ausströmöffnung 8. Aufgrund der Vergrößerten Einströmöffnung 7 bezüglich der Ausströmöffnung 8 des Rohrstutzens 6, kann die aus dem Spot-Luftführungskanal 4 innerhalb der schraubenförmigen Lufteiteinrichtungen 16 austretende Luft im Wesentlichen verständig in den Rohrstutzen 6 eingeleitet werden, so dass in vorteilhafter Weise beim Einleiten der Luft in den Rohrstutzen 6 im Wesentlichen keine Leckageluft auftritt. Der Rohrstutzen 6 ist ferner um eine vertikale Schwenkachse 11 verschwenkbar. Hierzu sind die Enden eines entsprechenden Achsstutzens für die vertikale Schwenkachse 11 an dem nicht dargestellten Gehäuse des Luftausströmers 1 gelagert. Der Luftausströmer 1 weist ferner an dem Rohrstutzen 6 Anleukpunkte 13 als Kopplungselemente auf. An den Anlenkpunkten 13 können Arme einer nicht dargestellten Kinematik oder eines Mechanismus angedenkt werden, so dass dadurch von dem Benutzer eines Kraftfahrzeuges, beispielsweise mittels eines Stellrades außen an dem Luftausströmer 1, der Rohrstutzen 6 um die vertikale Schwenkachse 11 verschwenkt werden kann (nicht dargestelt).

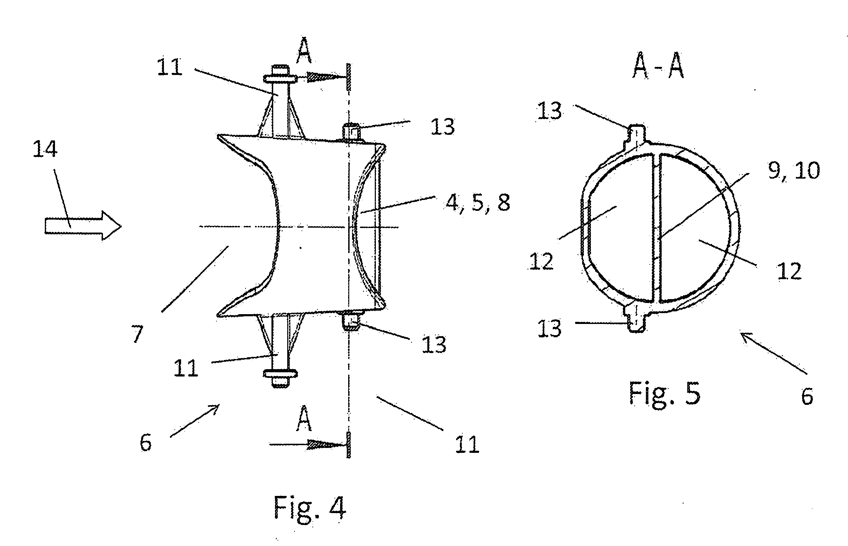

Der Rohrstutzen 6 weist ferner eine vollständig durchlaufende Mittelwandung 10 als Luftleitwandung 9 auf (Fig. 3 und 5). Die Mittelwandung 10 unterteilt den Strömungsraum innerhalb des Rohrstutzens 6 in zwei im Wesentlichen gleichgroße Teilströmungsräume 12. Aufgrund des vollständigen Durchlaufens der Mittelwandung 10 innerhalb des Rohrstutzens 6 bilden sich somit zwei Teilströmungsräume 12 aus, wobei von einem Teilströmungsraum 12 in den anderen Teilströmungsraum 12 keine Luft innerhalb des Rohrstutzens 6 strömen kann. Bei einem Verschwenken des Rohrstutzens 6 um die vertikale Schwenkachse 11 (nicht dargestellt), wird die an der Einströmöffnung 7 in den Rohrstutzen 6 eingeleitete Luft umgelenkt. Um eine Wirbelbildung innerhalb des Rohrstutzens 6 zu vermeiden, wird in vorteilhafter Weise durch die Mittelwandung 10 der Strömungsraum in zwei kleinere Teilströmungaräume 12 unterteilt, so dass dadurch die Luft innerhalb des Rohrstutzens 6 kanalisiert und im Wesentlichen parallel geführt wird, so dass dadurch eine Wirbelbildung innerhalb des Rohrstutzens 6 beim Umlenken im Wesentlichen ausgeschlossen werden kann und dadurch eine Ausströmung der Luft aus dem Rohrstutzen 6 an der Ausströmöffnung 8 als Spotstrahl auch bei einem starken Verschwenken des Rohrstutzens 6 sicher gewährleistet ist.

Der Rohrstutzen 6 ist innerhalb des Diffus-Luftführungskanales 2 ausgebildet (Fig. 3). In einem weiteren, nicht dargestellten Ausführungsbeispiel weist der Luftausströmer 1 dabei zwei Rohrstutzen 6 auf, die nebeneinander innerhalb eines größeren Diffus-Luftrührungskanales 2 ausgebildet und angeordnet sind (nicht dargestellt). Dabei sind bei einem derartigen, nicht dargestellten Luftausströmer 1 der Diffus-Luftführungskanal 2 und die beiden Rohrstutzen 6 innerhalb des nicht dargestellten Gehäuses angeordnet.

Insgesamt betrachtet sind mit dem erfindungsgemäßen Luftausströmer 1 und der erfindungsgemäßen Kraftfahrzeugklimaanlage wesentliche Vorteile verbunden. Die bezüglich der Einströmöffnung 7 vergrößerte Ausströmöffnung 8 des Rohrstutzens 6 ermöglicht es, dass Leckageluft für Luft als Spotstrahl, die durch den Rohrstutzen 6 geleitet werden soll, wesentlich verringert wird. Ferner wird aufgrund der Unterteilung des Strömungsraumes innerhalb des Rohrstutzens 6 in Teilströmungsräume 12 auch bei einem starken Verschwenken des Rohrstutzens 6 ein Ausleiten der Luft aus dem Rohrstutzen 6 an der Ausströmöffnung 8 als Spotstrahl gewährleistet, weil aufgrund der Mittelwandung 10 die Luft parallel innerhalb dem Rohrstutzen 6 auch bei einern starken Verschwenken des Rohrstutzens 6 geführt ist.

### Bezugszeichenliste

- 1: Luftausströmer
- 2: Diffus-Luftführungskanal
- 3: Diffus-Auslassöffnung
- 4: Spot-Luftführungskanal
- 5: Spot-Auslassöffnung
- 6: Rohrstutzen
- 7: Einströmöffnung des Rohrstutzens
- 8: Ausströmöffnung des Rohrstutzens
- 9: Luftleitwandung
- 10: Mittelwandung
- 11: Vertikale Schwenkachse
- 12: Teilströmungsraum
- 13: Anlenkpunkt Kopplungsetement
- 14: Einströmender Luftstrom 15 Drallerzeuger
Schraubenförmige Luftleiteinrichtung

## Patentansprüche

1. Luftausströmer (1), insbesondere für ein Fahrzeuginnenraum-Belüftungssystem, umfassend
- wenigstens einen Diffus-Luftführungskanal (2) mit wenigstens einer Diffus-Auslassöffnung (3) zum Ausleiten der Luft als Diffus- oder Drallstrahl,
- wenigstens einen Spot-Luftführungskanal (4) mit wenigstens einer Spot-Auslassöffnung (5) zum Ausleiten der Luft als Spotstrahl,
- wenigstens einen bewegbaren Rohrstutzen (6) mit einer Einströmöffnung (7) und einer Ausströmöffnung (8) als Spot-Auslassöffnung (5) und der wenigstens eine Rohrstutzen (6) den wenigstens einen Spot-Luftführungskanal (4) an der wenigstens einen Spot-Auslassöffnung (5) bildet und mittels eines Bewegens des wenigstens einen Rohrstutzens (6) unterschiedliche Ausströmrichtungen des Spotstrahles aus der wenigstens einen Spot-Auslassöffnung (5) einstellbar sind, wobei
in dem Rohrstutzen (6) wenigstens eine Luftleitwandung (9) ausgebildet ist, **dadurch gekennzeichnet, dass** der wenigstens eine Rohrstutzen (6) an der Einströmöffnung (7) eine größere Querschnittsfläche aufweist als an der Ausströmöffnung (8).

2. Luftausströmer nach Anspruch 1, **dadurch gekennzeichnet, dass** der wenigstens eine Rohrstutzen (6) eine konische Form mit einer in Strömungsrichtung der Luft abnehmenden Querschnittsfläche aufweist.

3. Luftausströmer nach Anspruch 1 oder 2, **dadurch gekennzeichnet, dass** der wenigstens eine Rohrstutzen (6) an der Einströmöffnung (7) eine größere Breite und/oder eine größer Höhe aufweist als an der Ausströmöffnung (8).

4. Luftausströmer nach einem oder mehreren der vorhergehenden Ansprüchen, **dadurch gekennzeichnet, dass** der wenigstens eine Rohrstutzen (6) verschwenkbar ist.

5. Luftausströmer nach einem oder mehreren der vorhergehenden Ansprüche, **dadurch gekennzeichnet, dass** die wenigstens eine Luftleitwandung (9) im Wesentlichen parallel zu einer Achse des wenigstens einen Rohrstutzens (6) oder einer Strömungsrichtung der Luft in dem wenigstens einen Rohrstutzen (6) ausgerichtet ist.

6. Luftausströmer nach einem oder mehreren der vorhergehenden Ansprüche, **dadurch gekennzeichnet, dass** die wenigstens eine Luftleitwandung (9) innerhalb des Strömungsraumes des wenigstens einen Rohrstutzens (6) vollständig durchlaufend ausgebildet ist, so dass die wenigstens eine Luftleitwandung (9) den Strömungsraum innerhalb des wenigstens einen Rohrstutzens (6) in wenigstens zwei vollständig abgetrennte Teilströmungsräume (12) unterteilt.

7. Luftausströmer nach einem oder mehreren der vorhergehenden Ansprüche, **dadurch gekennzeichnet, dass** die eine Luftleitwandung (9) als Mittelwandung (10) in dem wenigstens einen Rohrstutzen (6) ausgebildet ist, so dass die Mittelwandung (10) den Strömungsraum innerhalb des wenigstens einen Rohrstutzens (6) in nur zwei vollständig abgetrennte, im Wesentlichen gleich große Teilströmungsräume (12) unterteilt.

8. Luftausströmer nach einem oder mehreren der vorhergehenden Ansprüche, **dadurch gekennzeichnet, dass** in Strömungsrichtung vor dem wenigstens einen Rohrstutzen (6) ein Drallerzeuger (15) angeordnet ist.

9. Luftausströmer nach einem oder mehreren der vorhergehenden Ansprüche, **dadurch gekennzeichnet, dass** der wenigstens eine Rohrstutzen (6) innerhalb des wenigstens einen Diffus-Luftführungskanales (2) angeordnet ist und/oder der Luftausströmer (1) ein Gehäuse umfasst und innerhalb des Gehäuses der wenigstens eine Rohrstutzen (6) angeordnet ist und vorzugweise von dem Gehäuse der wenigstens einen Diffus-Luftführungskanal begrenzt (2) ist.

10. Kraftfahrzeugklimaanlage, **dadurch gekennzeichnet, dass** die Kraftfahrzeugklimaanlage wenigstens einen Luftausströmer (1) gemäß einem oder mehreren der vorhergehenden Ansprüche umfasst.

## Claims

1. An air vent (1), in particular for a vehicle interior ventilation system, said air vent comprising:
- at least one diffuse airflow duct (2) with at least one diffuse outlet opening (3) for discharging the air in the form of a diffuse or swirling jet,
- at least one spot airflow duct (4) with at least one spot outlet opening (5) for discharging the air in the form of a spot jet,
- and at least one movable connecting sleeve (6) with an inflow opening (7) and an outflow opening (8) in the form of a spot outlet opening (5), the at least one connecting sleeve (6) forming the at least one spot airflow duct (4) at the at least one spot outlet opening (5), and different outflow directions of the spot jet from the at least one spot outlet opening (5) being settable by movement of the at least one connecting sleeve (6), wherein
at least one air-guiding wall (9) is formed in the connecting sleeve (6), **characterised in that** the at least one connecting sleeve (6) has a greater cross-sectional area at the inflow opening (7) than at the outflow opening (8).

2. The air vent according to claim 1, **characterised in that** the at least one connecting sleeve (6) has a conical shape with a cross-sectional area that decreases in the direction of flow of the air.

3. The air vent according to claim 1 or 2, **characterised in that** the at least one connecting sleeve (6) has a greater width and/or a greater height at the inflow opening (7) than at the outflow opening (8).

4. The air vent according to one or more of the preceding claims, **characterised in that** the at least one connecting sleeve (6) is pivotable.

5. The air vent according to one or more of the preceding claims, **characterised in that** the at least one air-guiding wall (9) is oriented substantially parallel to an axis of the at least one connecting sleeve (6) or to a direction of flow of the air in the at least one connecting sleeve (6).

6. The air vent according to one or more of the preceding claims, **characterised in that** the at least one air-guiding wall (9) is formed completely continuously within the flow space of the at least one connecting sleeve (6), so that the at least one air-guiding wall (9) divides the flow space within the at least one connecting sleeve (6) into at least two completely separate partial flow spaces (12).

7. The air vent according to one or more of the preceding claims, **characterised in that** the one air-guiding wall (9) is formed as a centre wall (10) in the at least one connecting sleeve (6), so that the centre wall (10) divides the flow space within the at least one connecting sleeve (6) into only two completely separate partial flow spaces (12) of substantially equal size.

8. The air vent according to one or more of the preceding claims, **characterised in that** a swirl generator (15) is arranged upstream of the at least one connecting sleeve (6) in the direction of flow.

9. The air vent according to one or more of the preceding claims, **characterised in that** the at least one connecting sleeve (6) is arranged within the at least one diffuse airflow duct (2), and/or the air vent (1) comprises a housing and the at least one connecting sleeve (6) is arranged within the housing and the at least one diffuse airflow duct is preferably delimited (2) by the housing.

10. A motor vehicle air-conditioning system, **characterised in that** the motor vehicle air-conditioning system comprises at least one air vent (1) according to one or more of the preceding claims.

## Revendications

1. Diffuseur d'air (1), en particulier pour un système de ventilation de l'habitacle d'un véhicule, comprenant :
- au moins un conduit de guidage d'air diffus (2) comportant au moins une ouverture à débit diffus (3) servant à diriger l'air comme un jet diffus ou en tourbillons,
- au moins un conduit de guidage d'air concentré (4) comportant au moins une ouverture à débit concentré (5) servant à diriger l'air comme un jet concentré,
- au moins une tubulure mobile (6) comportant une ouverture de flux entrant (7) et une ouverture de flux sortant (8) servant d'ouverture à débit concentré (5), et la tubulure (6) au moins au nombre de un forme le conduit de guidage d'air concentré (4) au moins au nombre de un, au niveau de l'ouverture à débit concentré (5) au moins au nombre de un, et, grâce à un déplacement de la tubulure (6) au moins au nombre de un, différentes directions de flux sortant concernant le jet concentré sont réglables à partir de l'ouverture à débit concentré (5) au moins au nombre de un,
où au moins une paroi déflectrice d'air (9) est configurée dans la tubulure (6),
**caractérisé en ce que** la tubulure (6) au moins au nombre de un présente, au niveau de l'ouverture de flux entrant (7), une surface de section plus grande que celle au niveau de l'ouverture de flux sortant (8).

2. Diffuseur d'air selon la revendication 1, **caractérisé en ce que** la tubulure (6) au moins au nombre de un présente une forme conique ayant une surface de section diminuant dans la direction d'écoulement de l'air.

3. Diffuseur d'air selon la revendication 1 ou 2, **caractérisé en ce que** la tubulure (6) au moins au nombre de un présente, au niveau de l'ouverture de flux entrant (7), une largeur plus grande et/ou une hauteur plus importante que celles au niveau de l'ouverture de flux sortant (8).

4. Diffuseur d'air selon l'une quelconque ou plusieurs des revendications précédentes, **caractérisé en ce que** la tubulure (6) au moins au nombre de un est orientable.

5. Diffuseur d'air selon l'une quelconque ou plusieurs des revendications précédentes, **caractérisé en ce que** la paroi déflectrice d'air (9) au moins au nombre de un est orientée en étant pratiquement parallèle à un axe de la tubulure (6) au moins au nombre de un ou bien à une direction d'écoulement de l'air dans la tubulure (6) au moins au nombre de un.

6. Diffuseur d'air selon l'une quelconque ou plusieurs des revendications précédentes, **caractérisé en ce que** la paroi déflectrice d'air (9) est configurée de façon complètement continue à l'intérieur de l'espace d'écoulement de la tubulure (6) au moins au nombre de un, de sorte que la paroi déflectrice d'air (9) au moins au nombre de un subdivise l'espace d'écoulement situé à l'intérieur de la tubulure (6) au moins au nombre de un, en au moins deux espaces d'écoulement partiel (12) complètement séparés.

7. Diffuseur d'air selon l'une quelconque ou plusieurs des revendications précédentes, **caractérisé en ce que** la paroi déflectrice d'air (9) est configurée comme paroi centrale (10) dans la tubulure (6) au moins au nombre de un, de sorte que la paroi centrale (10) subdivise l'espace d'écoulement situé à l'intérieur de la tubulure (6) au moins au nombre de un, en seulement deux espaces d'écoulement partiel (12) complètement séparés et pratiquement de la même grandeur.

8. Diffuseur d'air selon l'une quelconque ou plusieurs des revendications précédentes, **caractérisé en ce qu'**un générateur de tourbillons (15) est disposé en amont de la tubulure (6) au moins au nombre de un, dans la direction d'écoulement.

9. Diffuseur d'air selon l'une quelconque ou plusieurs des revendications précédentes, **caractérisé en ce que** la tubulure (6) au moins au nombre de un est disposée à l'intérieur du conduit de guidage d'air diffus (2) au moins au nombre de un, et/ou le diffuseur d'air (1) comprend un carter, la tubulure (6) au moins au nombre de un étant disposée à l'intérieur du carter, et le conduit de guidage d'air diffus (2) au moins au nombre de un est délimité de préférence par le carter.

10. Système de climatisation d'un véhicule automobile, **caractérisé en ce que** le système de climatisation d'un véhicule automobile comprend au moins un diffuseur d'air (1) conformément à l'une quelconque ou à plusieurs des revendications précédentes.
